# EUROPÄISCHE PATENTANMELDUNG

(11) **EP 2 607 552 A1**
(43) Veröffentlichungstag der Anmeldung: **26.06.2013**
(21) Anmeldenummer: 11195226.3
(22) Anmeldetag: 22.12.2011
(51) Int. Cl.: E01C 3/06, E01C 13/02, E01C 13/08

(54) **Wasserdrainage- und Wasserrückhaltekörper, insbesondere mit Wabenstruktur**

(71) Anmelder: Econcore N.v., 3001 Leuven (BE)
(72) Erfinder: Pflug, Jochen, 65207 Wiesbaden (DE)
(74) Vertreter: Bird Goën & Co

(57) **Zusammenfassung**

Wasserdrainage- und Wasserrückhaltekörper zur Verwendung in Untergrundflächen (12), insbesondere im Außenbereich, mit einer Mehrzahl von in einem Benutzungszustand in einer horizontalen Ebene (16) aneinandergrenzenden, im Wesentlichen prismatischen Hohlkörpern (20, 22, 24; 76), die jeweils eine Bodenfläche (26; 78), die im Wesentlichen parallel zu der horizontalen Ebene (16) angeordnet ist, und eine Mantelflächeneinheit (28) aufweisen, und deren Achsen (32) im Wesentlichen in einer vertikalen Richtung (18) senkrecht zu der horizontalen Ebene (16) angeordnet sind, wobei zumindest eine Mantelfläche (30) der Mantelflächeneinheit (28) eines Hohlkörpers (20, 22, 24; 76) zugleich als eine Mantelfläche (30) der Mantelflächeneinheit (28) eines angrenzenden Hohlkörpers (20, 22, 24; 76) dient.

## Beschreibung

Die vorliegende Erfindung betrifft einen Wasserdrainage- und Wasserrückhaltekörper nach dem Gegenstand des unabhängigen Anspruchs 1 sowie ein Verfahren zur Herstellung des Wasserdrainage- und Wasserrückhaltekörpers gemäß dem unabhängigen Anspruch 15.

### Stand der Technik

Es sind bereits Wasserdrainage- und Wasserrückhaltekörper zur Regulierung einer Bodenfeuchtigkeit von Au ßenflächen, beispielsweise von Plätzen und Grünflächen, bekannt. Es ist von zunehmender Bedeutung, dass auf diesen Flächen Regenwasser in ausreichendem Maße ablaufen kann, um Überschwemmungen zu vermeiden, andererseits aber auch Regenwasser bewahrt werden kann, um gegebenenfalls Bodenfeuchtigkeit zu erhalten.

Der Erfindung liegt daher insbesondere die Aufgabe zugrunde, einen verbesserten Wasserdrainage- und Wasserrückhaltekörper zur Regulierung der Bodenfeuchtigkeit bereitzustellen, der eine hohe mechanische Stabilität und eine hohe Wasserspeicherkapazität aufweist und dabei einfach herstellbar und verlegbar ist.

Um diese zwei gegensätzlichen Probleme zu lösen, sind verschiedene Lösungen bekannt, die entweder auf Rollenware (z.B. Noppenfolie), die in Bahnen verlegt werden kann, oder auf Blöcken beruhen (z.B. extrudierte Wabenblöcke oder spritzgegossene Blöcke), die nicht in Bahnen verlegt werden können.

Bei dem Aufbau eines Regenwassermanagementsystems aus Blöcken ist das Positionieren und Verbinden der Blöcke zeitaufwendig. Ferner ist eine große Einbautiefe und damit ein großer Aushub nötig. Vorteilhaft sind bei Systemen aus Wabenblöcken insbesondere die hohe Wasserspeicherkapazität und die hohe Druckfestigkeit, die eine vielfältige Nutzung der Fläche ermöglicht.

Die Patentveröffentlichungen WO 88/02422 und FR 2659996 (Induplast) zeigen die Verwendung von Wabenblöcken. Die Patentveröffentlichung DE 10 2005 056131 (Heitker) und DE 20 2005 002169 (Rehau) zeigen die Verwendung von spritzgegossenen Kunststoffblöcken.

Regenwassermanagementsysteme aus Rollenware wie z.B. Noppenbahnen (z.B. Delta®-Floraxx von Dörken oder Floradrain® von ZinCo) können sehr schnell und kostengünstig großflächig installiert werden, haben aber eine relativ geringe Wasserspeicherkapazität und eine geringe Druckfestigkeit, welche die Nutzung der Fläche einschränkt.

### Offenbarung der Erfindung

Gegenstand der vorliegenden Erfindung ist eine Wasserdrainage- und Wasserrückhaltekörper zur Verwendung in Untergrundflächen, insbesondere im Außenbereich, mit einer Mehrzahl von in einem Benutzungszustand in einer horizontalen Ebene aneinandergrenzenden, im Wesentlichen prismatischen Hohlkörpern, die jeweils eine Bodenfläche, die im Wesentlichen parallel zu der horizontalen Ebene angeordnet ist, und eine Mantelflächeneinheit aufweisen, und deren Achsen im Wesentlichen in einer vertikalen Richtung senkrecht zu der horizontalen Ebene angeordnet sind, wobei zumindest eine Mantelfläche der Mantelflächeneinheit eines Hohlkörpers zugleich als eine Mantelfläche der Mantelflächeneinheit eines angrenzenden Hohlkörpers dient. Unter einem "prismatischen" Körper soll in diesem Zusammenhang insbesondere ein Körper verstanden werden, der eine Grundfläche aufweist, die von einem Polygon gebildet ist, und dessen Seitenkanten, die Kanten von Mantelflächen des prismatischen Körpers bilden, parallel verlaufen und von gleicher Länge sind. Unter "im Wesentlichen prismatisch" soll in diesem Zusammenhang insbesondere verstanden werden, dass eine Abweichung eines von dem Hohlkörper begrenzten Volumens eines prismatischen Körpers, der an den Hohlkörper nach der Methode der kleinsten Fehlerquadrate optimal angepasst ist, vorteilhaft geringer ist als 30 %, bevorzugt geringer ist als 20 %, und, besonders bevorzugt, geringer ist als 10 % des von dem Hohlkörper begrenzten Volumens. Unter "im Wesentlichen" soll in dieser Anmeldung im Zusammenhang mit Richtungen, mit Parallelität und mit Neigungen von Ebenen insbesondere verstanden werden, dass eine Winkelabweichung von der bezeichneten Richtung, Parallelität oder Ebenenneigung vorteilhaft geringer ist als 20°, bevorzugt geringer als 15° und, besonders bevorzugt, geringer als 10°.

Dadurch kann bei einer geeigneten Ausgestaltung ein Wasserdrainage- und Wasserrückhaltekörper mit guten Möglichkeiten zu einer Regulierung von Regen- oder Beregnungswasser durch Wasserdrainage und/oder ein Zurückhalten von Wasser bereitgestellt werden. Der erfindungsgemäße Wasserdrainage- und Wasserrückhaltekörper kann eine hohe Wasseraufnahmefähigkeit in einer kompakten Anordnung bei einem geringen Materialverbrauch zur Herstellung aufweisen. Weiterhin kann zugleich eine hohe Stabilität gegenüber einer äußeren Krafteinwirkung in der vertikalen Richtung und gegenüber Schubspannungen in der horizontalen Richtung, beispielsweise durch ein bremsendes Kraftfahrzeug, erreicht werden.

In einer vorteilhaften Ausgestaltung bildet eine die Bodenfläche eines ersten Hohlkörpers der Hohlkörper begrenzende Randlinie zugleich einen Teil einer Randlinie einer der Mantelflächen der Mantelflächeneinheit zumindest eines der an den ersten Hohlkörper angrenzenden Hohlkörper. Dadurch können in einfacher und kompakter Weise räumlich naheliegende, abwechselnde Möglichkeiten von Wasserrückhaltung und Wasserabfluss bereitgestellt werden.

Wenn eine der Mantelflächen der Mantelflächeneinheit zumindest eines Hohlkörpers der Hohlkörper und eine der Mantelflächen der Mantelflächeneinheit eines der an den Hohlkörper angrenzenden Hohlkörper stoffschlüssig miteinander verbunden sind, kann eine einfache, kostengünstige Herstellbarkeit des Wasserdrainage- und Wasserrückhaltekörpers erzielt werden.

Ferner wird vorgeschlagen, dass zumindest eine der Mantelflächen der Mantelflächeneinheit zumindest eines Hohlkörpers der Hohlkörper und eine der Mantelflächen der Mantelflächeneinheit eines der an den Hohlkörper angrenzenden Hohlkörper separat ausgebildet sind und sich im Benutzungszustand zumindest teilweise in einem direkten Kontakt zueinander befinden. Dadurch kann bei einer geeigneten Ausgestaltung nach einer Herstellung des Wasserdrainage- und Wasserrückhaltekörpers eine auf eine Rolle aufwickelfähige Form und im Benutzungszustand eine kompakte Anordnung erreicht werden.

In einer weiteren vorteilhaften Ausgestaltung bilden die Bodenflächen der Hohlkörper in einer parallel zur horizontalen Ebene angeordneten ersten Richtung eine geschlossen zusammenhängende Fläche aus, die im Wesentlichen parallel zur horizontalen Ebene angeordnet ist, wodurch eine einfache Aufteilung der Untergrundfläche in erste Teilflächen, für die eine

Wasserrückhaltung vorgesehen ist, und zweite Teilflächen, für die ein Wasserabfluss vorgesehen ist, erreicht werden kann.

Zudem wird vorgeschlagen, dass die Bodenflächen der Hohlkörper in zumindest einer parallel zur horizontalen Ebene angeordneten zweiten Richtung, die die erste Richtung in einem Punkt schneidet, keine zusammenhängende Fläche ausbilden. Dadurch kann in konstruktiv einfacher Weise eine gleichmäßige Aufteilung der Untergrundfläche in Teilflächen mit Wasserrückhaltung und Teilflächen mit Wasserabfluss erzielt werden.

Vorteilhaft sind die Bodenfläche eines ersten Hohlkörpers der Hohlkörper und die Bodenfläche zumindest eines der an den ersten Hohlkörper angrenzenden Hohlkörper in der vertikalen Richtung beabstandet ausgebildet. Für eine Aufteilung der Untergrundfläche in Teilflächen, für die eine Wasserrückhaltung vorgesehen ist, und Teilflächen, für die ein Wasserabfluss vorgesehen ist, können dadurch vielfältige Variationsmöglichkeiten bereitgestellt werden. Ferner kann der Wasserdrainage- und Wasserrückhaltekörper dadurch mit einem großen Wasserrückhaltevolumen ausgestattet werden. Bevorzugt beträgt ein Abstand zwischen der Bodenfläche eines der Hohlkörper und der Bodenfläche eines der angrenzenden Hohlkörper in der vertikalen Richtung zwischen 10 mm und 500 mm. Besonders bevorzugt beträgt er 20 mm oder 100 mm.

In einer weiteren vorteilhaften Ausgestaltung sind die Bodenflächen aneinandergrenzender Hohlkörper, die entlang zumindest einer parallel zur horizontalen Ebene angeordneten zweiten Richtung, die die erste Richtung in einem Punkt schneidet, angeordnet sind, in der vertikalen Richtung beabstandet ausgebildet, wodurch konstruktiv einfach eine gleichmäßige Aufteilung der Untergrundfläche in Teilflächen, für die eine Wasserrückhaltung vorgesehen ist, und Teilflächen, für die ein Wasserabfluss vorgesehen ist, erreicht werden.

Des Weiteren wird vorgeschlagen, dass die Bodenfläche zumindest eines der Hohlkörper zumindest eine als Durchbruch in vertikaler Richtung ausgebildete Ausnehmung umfasst. Dadurch können weitere Variationsmöglichkeiten hinsichtlich der Wasserrückhaltung und des Wasserabflusses und zu einer Anpassung des Wasserdrainage- und Wasserrückhaltekörpers an eine örtliche Untergrundbeschaffenheit zur Erzielung einer gewünschten Wasserverteilung bereitgestellt werden. Beispielsweise können mehrere, von kleinen Löchern gebildete Durchbrüche vorgesehen sein, die mittels einer Nadelwalze kostengünstig an den Bodenflächen anbringbar sind. Wenn die kleinen Löcher an oberflächennahen Bodenflächen der Hohlkörper vorgesehen sind, kann Luft bei einem Eindringen des Wassers von unten in den Hohlkörper entweichen. Durch an oberflächenfernen Bodenflächen vorgesehene kleine Löcher kann der Wasserabfluss aus den Hohlkörpern eingestellt werden. Dabei bestimmt die Größe der Löcher eine Durchflussrate des Wassers in und aus den Hohlkörpern.

Besonders vorteilhaft sind die Bodenflächen der Hohlkörper im Wesentlichen in Form von regelmäßigen Sechsecken ausgebildet. Dadurch kann einerseits die Untergrundfläche möglichst lückenlos mit Hohlkörpern abgedeckt und andererseits Bereiche des Wasserdrainage- und Wasserrückhaltekörpers, die weder zur Wasserrückhaltung noch zum Wasserabfluss vorgesehen sind, möglichst klein gehalten werden. In der vertikalen Richtung kann auf konstruktiv einfache Weise und bei einem geringen Materialeinsatz eine hohe Stabilität erzielt werden. Die Hohlkörper können vorteilhaft insbesondere in Form einer Wabenstruktur angeordnet sein.

Wenn die Bodenflächen der Hohlkörper jeweils genau zwei Symmetrieachsen aufweisen, können unter Beibehaltung der einfachen Konstruktion und der hohen Stabilität bei nur geringfügig erhöhtem Materialeinsatz Lösungen mit variableren Gestaltungsmöglichkeiten als bei einer Lösung mit höherer Symmetrie bereitgestellt werden. Beispielsweise können die Bodenflächen der Hohlkörper eine Form eines Sechsecks mit genau zwei zueinander senkrechten Symmetrieachsen und zwei verschiedenen Seitenlängen aufweisen.

In einer vorteilhaften Ausgestaltung bestehen die Hohlkörper im Wesentlichen aus einem thermoplastischen Kunststoff. Unter "im Wesentlichen" soll in diesem Zusammenhang insbesondere verstanden werden, dass die Hohlkörper zu einem Anteil von mindestens 40 Vol.-%, bevorzugt von mindestens 70 Vol.-% und, besonders bevorzugt, von mindestens 90 Vol.-% aus dem thermoplastischen Kunststoff bestehen. Die Hohlkörper können insbesondere auch vollständig aus dem thermoplastischen Kunststoff bestehen. Alternativ können die Hohlkörper auch aus dem thermoplastischen Kunststoff mit 10% - 50% Talkum als Füllstoff oder anderen kostengünstigen Füllstoffen bestehen.

Durch diese Ausgestaltung können die Wasserdrainage- und Wasserrückhaltekörper in einem kostengünstigen großtechnischen Prozess hergestellt werden, beispielsweise durch einen Rotations-Vakuumtiefziehprozess. Vorzugsweise werden die Wasserdrainage- und Wasserrückhaltekörper aus extrudiertem Polypropylen (PP) mit 20% Talkum als Füllstoff hergestellt.

Vorteilhaft sind die Hohlkörper des Wasserdrainage- und Wasserrückhaltekörpers im Benutzungszustand lückenlos in einer länglichen Bahn angeordnet. Dadurch kann eine einfache Handhabung und eine gute Verlegbarkeit bei möglichst vollständiger Bodenabdeckung erreicht werden.

Außerdem wird ein Wasserdrainage- und Wasserrückhaltesystem mit zumindest einem der aus- und weitergestalteten Wasserdrainage- und Wasserrückhaltekörper und zumindest einer Vlieseinheit vorgeschlagen, die mit zumindest zwei Bodenflächen von zweien der Hohlkörper des Wasserdrainage- und Wasserrückhaltekörpers stoffschlüssig verbunden ist. Dadurch kann der Wasserdrainage- und Wasserrückhaltekörper mit einer Decklage ausgestattet werden, um ein unerwünschtes Eindringen von Material zu vermeiden oder um ein Auswaschen von Material aus den Hohlkörpern zu verhindern. Die Vlieseinheit kann auch als wasserundurchlässige Folie ausgestaltet sein, wodurch weitere Gestaltungsmöglichkeit zur Regulierung einer Feuchte der Untergrundfläche bereitgestellt werden können. In diesem Fall kann die Vlieseinheit vorteilhaft an einer der Oberfläche abgewandten Seite der Wasserdrainage- und Wasserrückhaltekörper vorgesehen sein. Grundsätzlich kann das Wasserdrainage- und Wasserrückhaltesystem auch je eine Vlieseinheit sowohl an der der Oberfläche zugewandten Seite der Wasserdrainage- und Wasserrückhaltekörper als auch an der der Oberfläche abgewandten Seite der Wasserdrainage- und Wasserrückhaltekörper aufweisen.

### Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Wasserdrainage- und Wasserrückhaltesystems in einem Benutzungszustand in einer Untergrundfläche in einer seitlichen Ansicht,
- Fig. 2a: das Wasserdrainage- und Wasserrückhaltesystem gemäß der Fig. 1 mit einem Wasserdrainage- und Wasserrückhaltekörper in verschiedenen Stadien einer Herstellung in einer Ansicht von schräg oben,
- Fig. 2b: das Wasserdrainage- und Wasserrückhaltesystem gemäß der Fig. 2a in einer Ansicht von schräg unten,
- Fig. 3: eine vergrößerte Detailansicht des Wasserdrainage- und Wasserrückhaltekörpers gemäß der Fig. 1,
- Fig. 4: das Wasserdrainage- und Wasserrückhaltesystem gemäß der Fig. 1 in einem aufgerollten Zustand, und
- Fig. 5: eine alternative Form einer Bodenfläche von Hohlkörpern des Wasserdrainage- und Wasserrückhaltekörpers gemäß der Fig. 1 in einer Drauf-sicht.

### Beschreibung der Ausführungsbeispiele

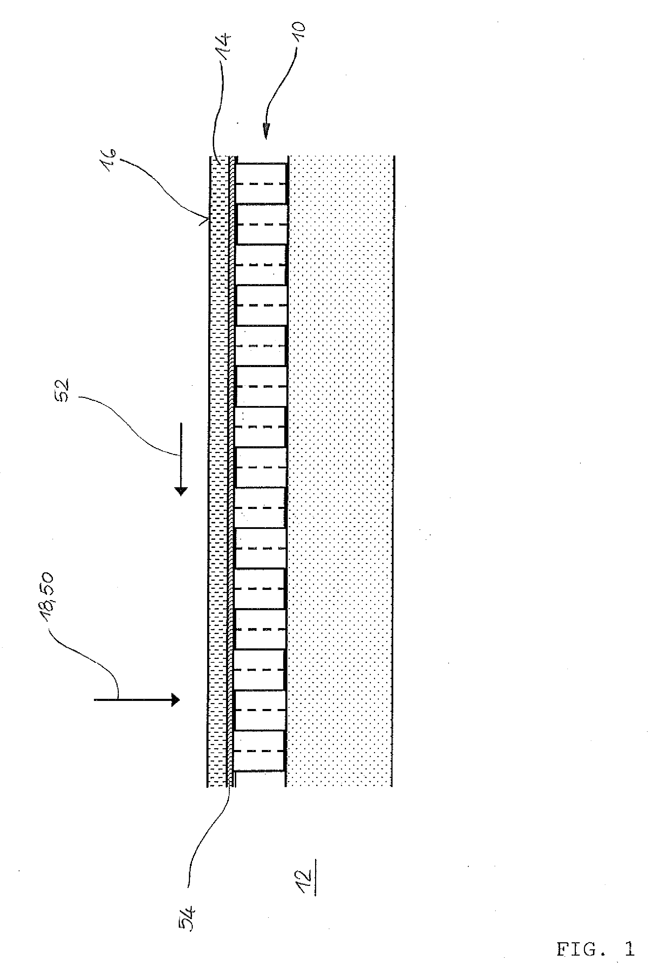

Fig. 1 zeigt eine schematische Darstellung eines erfindungsgemäßen Wasserdrainage- und Wasserrückhaltesystems 10 in einem Benutzungszustand in einer als Garagenzufahrt mit einer Rasenabdeckung als Oberfläche 14 ausgebildeten Untergrundfläche 12. Die Untergrundfläche 12 erstreckt sich im Wesentlichen parallel zu einer horizontalen Ebene 16.

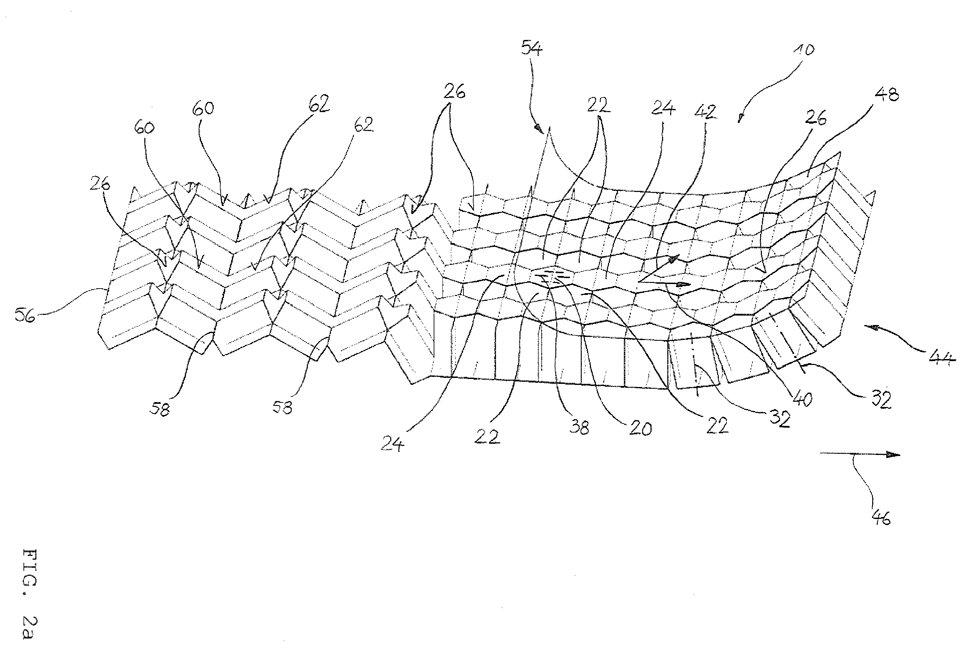

In einer Ansicht von schräg oben zeigt Fig. 2a das Wasserdrainage- und Wasserrückhaltesystem 10 gemäß der Fig. 1 mit einem erfindungsgemäßen Wasserdrainage- und Wasserrückhaltekörper zur Verwendung in der Untergrundfläche 12 eines Außenbereichs, beispielsweise eines Platzes, einer Grünfläche oder eines als Umkehrdach ausgebildeten Flachdachs, mit Oberflächen aus Rasen, Kunstrasen, Sand, Kies oder Steinen, in verschiedenen Stadien einer Herstellung. Das Wasserdrainage- und Wasserrückhaltesystem 10 ist dazu vorgesehen, Regenwasser und/oder Beregnungswasser einerseits in ausreichendem Maße abfließen zu lassen, um eine Pfützenbildung und Überschwemmungen der Untergrundfläche 12 zu vermeiden, und andererseits Regenwasser und/oder Beregnungswasser in ausreichendem Maße zurückzuhalten, um einen Bewuchs der Untergrundfläche 12 mit Feuchtigkeit zu versorgen.

Der Wasserdrainage- und Wasserrückhaltekörper besteht vollständig aus einem von extrudiertem Polypropylen (PP) gebildeten thermoplastischen Kunststoff und weist eine Mehrzahl von in einem Benutzungszustand, in dem der Wasserdrainage- und Wasserrückhaltekörper in der Untergrundfläche 12 eingebettet und mit der Oberfläche 14 aus Rasen, Kunstrasen, Sand, Kies oder Steinen abgedeckt ist, in der horizontalen Ebene 16 aneinandergrenzenden, im Wesentlichen prismatischen Hohlkörpern 20, 22, 24 auf, die im Benutzungszustand in einer länglichen Bahn 44 mit einer Bahnerstreckungsrichtung 46 angeordnet sind, wobei Randbereiche 48 der Bahn 44 Teilkörper von prismatischen Hohlkörpern 20, 22, 24 aufweisen.

Jeder der prismatischen Hohlkörper 20, 22, 24 umfasst eine Bodenfläche 26, die mit Ausnahme von Kantenabrundungen in Form eines regelmäßigen Sechsecks ausgebildet ist, so dass im Benutzungszustand prinzipiell eine vollständige Abdeckung der Untergrundfläche 12 mit Hohlkörpern 20, 22, 24 ermöglicht ist. Die Bodenfläche 26 jedes der Hohlkörper 20, 22, 24 ist parallel zu der horizontalen Ebene 16 angeordnet.

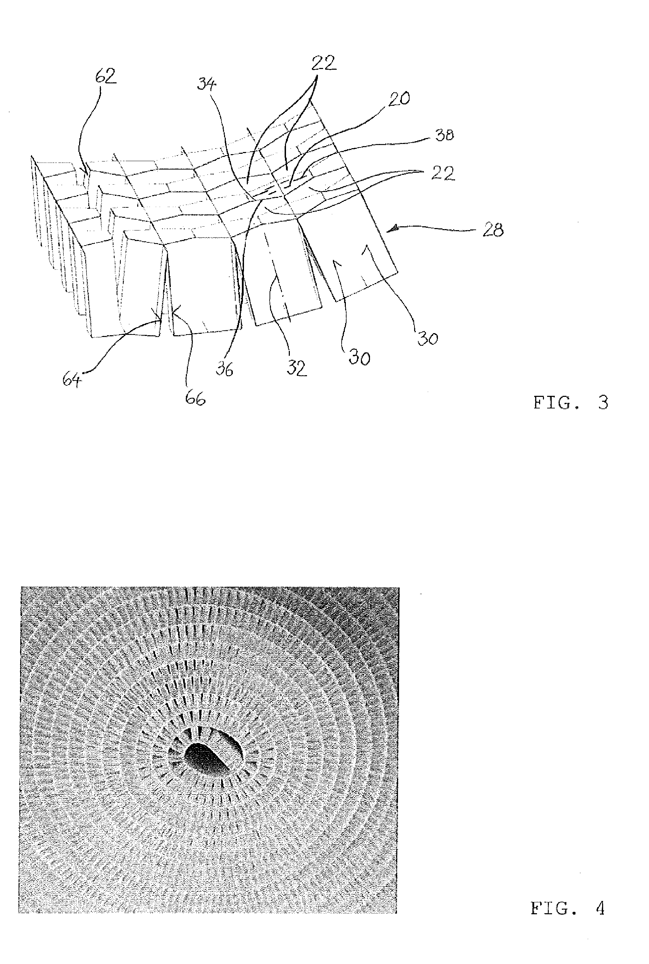

Der Aufbau der aneinandergrenzenden Hohlkörper 20, 22, 24 wird im Folgenden ausgehend von einem ersten Hohlkörper 20 der Mehrzahl von Hohlkörpern 20, 22, 24 beschrieben (Fig. 2a). Jeder der prismatischen Hohlkörper 20, 22, 24 weist eine Mantelflächeneinheit 28 mit sechs Mantelflächen 30 und eine Achse 32 auf (Fig. 3), die im Benutzungszustand in einer vertikalen Richtung 18 senkrecht zu der horizontalen Ebene 16 angeordnet ist. Wie aus der Fig. 3 ersichtlich ist, dienen vier der sechs Mantelflächen 30 der Mantelflächeneinheit 28 des ersten Hohlkörpers 20 zugleich als eine Mantelfläche 30 der Mantelflächeneinheit 30 eines von vier an den ersten Hohlkörper 20 angrenzenden Hohlkörpern 22.

Die Bodenflächen 26 der Hohlkörper 20, 22, 24 sind in der vertikalen Richtung 18 in zwei unterschiedlichen Niveaus angeordnet. Bei Betrachtung des ersten Hohlkörpers 20, an den sechs weitere Hohlkörper 22, 24 angrenzen, ist zu erkennen, dass die Bodenfläche 26 des ersten Hohlkörpers 20 und die Bodenflächen 26 von vier Hohlkörpern 22 der sechs angrenzenden Hohlkörper 22, 24 in der vertikalen Richtung 18 beabstandet ausgebildet sind, wobei die Bodenfläche 26 des ersten Hohlkörpers 20 der Oberfläche 14 zugewandt und die Bodenflächen 26 der vier angrenzenden Hohlkörper 22 der Oberfläche 14 abgewandt angeordnet sind und ein Abstand der Bodenflächen 26 in der vertikalen Richtung 18 30 mm beträgt. Dadurch sind die vier angrenzenden Hohlkörper 22 zu einer Rückhaltung von Regen- oder Beregnungswasser ausgestattet, während der erste Hohlkörper 20 dazu vorgesehen ist, durch überschüssige Wassermengen von unten gefüllt zu werden.

Die Bodenfläche 26 des ersten Hohlkörpers 20 umfasst eine Mehrzahl von als Durchbruch 38 in der vertikalen Richtung 18 ausgebildeten Ausnehmungen auf, die einen Austausch von Wasser in der vertikalen Richtung 18 und deren Gegenrichtung erlauben und ermöglichen, eine Zwischenstufe zwischen einem Hohlkörper 20, 22, 24, der zur Wasserrückhaltung und einem Hohlkörper 20, 22, 24, der zum Wasserabfluss vorgesehen ist, bereitzustellen. Weitere der Hohlkörper 20, 22, 24 sind ebenfalls mit Durchbrüchen 38 ausgestattet. Aus Gründen der Übersichtlichkeit ist dies jedoch nicht dargestellt.

Durch die Ausgestaltung der Bodenflächen 26 der Hohlkörper 20, 22, 24 als regelmäßige Sechsecke und die Einbettung in die Untergrundfläche 12 weist der Wasserdrainage- und Wasserrückhaltekörper eine hohe Stabilität gegenüber einer Einwirkung einer äußeren Kraft 50 in der vertikalen Richtung 18 und gegenüber einer Schubspannung 52 in einer parallel zur horizontalen Ebene 16 angeordneten Richtung auf, wie sie beispielsweise durch ein Kraftfahrzeug erzeugt werden, das auf der mit dem Wasserdrainage- und Wasserrückhaltekörper ausgestatteten Untergrundfläche 12 bremst (Fig. 1).

Weiterhin ist aus der Fig. 3 offenkundig, dass eine die Bodenfläche 26 des ersten Hohlkörpers 20 begrenzende Randlinie 34 zugleich einen Teil einer Randlinie 36 einer der Mantelflächen 30 der Mantelflächeneinheit 28 von vier Hohlkörpern 22 der sechs angrenzenden Hohlkörper 22, 24 bildet.

Die Bodenfläche 26 des ersten Hohlkörpers 20 bildet mit Bodenflächen 26 der zwei übrigen Hohlkörper 24 der sechs angrenzenden Hohlkörper 24, 26 in einer parallel zur horizontalen Ebene 16 angeordneten ersten Richtung 40 eine geschlossen zusammenhängende Fläche aus, die parallel zur horizontalen Ebene 16 angeordnet ist. Dies setzt sich für die in der ersten Richtung 40 angeordneten Hohlkörper 24 fort, so dass, wie aus der Fig. 2a erkennbar ist, streifenförmige Teilflächen der Untergrundfläche 12, die zur Wasserrückhaltung vorgesehen sind, in einer Richtung, die senkrecht zur ersten Richtung 40 und parallel zur horizontalen Ebene 16 angeordnet ist, mit streifenförmigen Teilflächen der Untergrundfläche 12 abwechseln, die zu einem Wasserabfluss vorgesehen sind. Eine von einem wasserdurchlässigen Polyestervliesstoff gebildete Vlieseinheit 54 ist mit den Bodenflächen 26 der Hohlkörper 20, 24, die zu einem Wasserabfluss vorgesehen sind, mittels eines Laminiervorgangs stoffschlüssig verbunden. Die Vlieseinheit 54 verbessert einen Zusammenhalt des Wasserdrainage- und Wasserrückhaltekörpers und verhindert ein unerwünschtes Eindringen von Material in die zur Wasserrückhaltung vorgesehenen Hohlkörper 20, 22, 24.

In einer zweiten Richtung 42 - und in weiteren Richtungen parallel zur zweiten Richtung - die parallel zur horizontalen Ebene 16 angeordnet sind, die erste Richtung 40 in einem Punkt schneidet und entlang der der erste Hohlkörper 20 angeordnet ist, bildet die Bodenfläche 26 des ersten Hohlkörpers 20 mit Bodenflächen 26 von in der zweiten Richtung 42 an den ersten Hohlkörper 20 angrenzenden Hohlkörpern 22 keine zusammenhängende Fläche aus. Die Bodenflächen 26 der entlang der zweiten Richtung 42 angeordneten, aneinandergrenzenden Hohlkörper 22 sind beabstandet ausgebildet, so dass auf der Untergrundfläche 12 in einem engen Abstand Teilflächen der Untergrundfläche 12, die zur Wasserrückhaltung vorgesehen sind, mit Teilflächen der Untergrundfläche 12 abwechseln, die zu einem Wasserabfluss vorgesehen sind, wodurch eine sehr gleichmäßige Wasserverteilung ermöglicht werden kann.

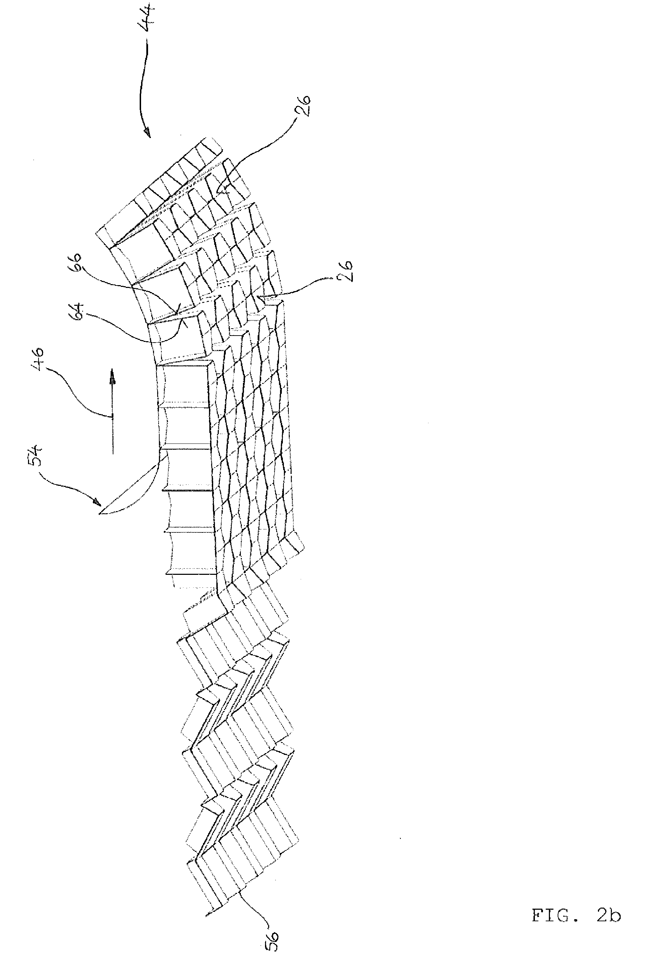

Der jeweils linke Teil der Figuren 2a und 2b zeigt den Wasserdrainage- und Wasserrückhaltekörper in einem Zustand der Herstellung nach Anwendung eines nicht dargestellten Rotations-Vakuumtiefziehprozesses auf eine extrudierte PP-Folienbahn 56. Die PP-Folienbahn 56 weist in diesem Zustand eine quer zur Bahnerstreckungsrichtung 46 verlaufende Faltlinie 58 auf. Zu beiden Seiten der Faltlinie 58 sind als Mantelflächen 30 von Hohlkörpern 20, 24 vorgesehene, rechteckförmige Teilflächen 60, 62 der geformten PP-Folienbahn 56 angeordnet, die in der Bahnerstreckungsrichtung 46 ausgerichtet sind und deren der Faltlinie 58 zugewandte kürzere Rechteckseite mit der Faltlinie 58 fluchtet. In einem weiteren Herstellungsschritt werden die zu beiden Seiten der Faltlinie 58 angeordneten, rechteckförmigen Teilflächen 60, 62 aneinandergelegt und thermisch verschweißt, so dass eine Mantelfläche 30 der Mantelflächeneinheiten 28 der Hohlkörper 20, 24 und eine Mantelfläche 28 der Mantelflächeneinheit eines der angrenzenden Hohlkörper 20, 24 stoffschlüssig miteinander verbunden sind. Die Hohlkörper 20, 24, deren Mantelflächen 28 thermisch verschweißt sind, weisen der Oberfläche 14 zugewandte Bodenflächen 26 auf.

Aus dem rechten Teil der Fig. 2b und der Detailansicht in Fig. 3 ist ersichtlich, dass zwei in der ersten Richtung 40 aneinandergrenzend angeordnete Hohlkörper 22, deren Bodenflächen 26 im Benutzungszustand der Oberfläche 14 abgewandt sind, jeweils eine separat ausgebildete Mantelfläche 64, 66 der Mantelflächeneinheit 28 aufweisen, die sich im Benutzungszustand, in dem die Achsen 32 der Hohlkörper 20, 22, 24 in der vertikalen Richtung 18 ausgerichtet sind, teilweise in einem direkten Kontakt zueinander befinden. Die separate Ausbildung dieser Mantelflächen 30 ermöglicht eine Beabstandung der Hohlkörper 20, 22, 24 auf einer Seite der Bahn 44, die im Benutzungszustand der Oberfläche 14 abgewandt ist, wodurch das Wasserdrainage- und Wasserrückhaltesystem als Rolle mit oder ohne Rollenkern aufwickelbar ist (Fig. 4) und im Benutzungszustand trotzdem eine kompakte Anordnung aufweist. Prinzipiell kann das Wasserdrainage- und Wasserrückhaltesystem 10 während der Herstellung endlos als Rolle gewickelt und zur Verlegung als Bahn 44 aus der Rollenform abgerollt werden.

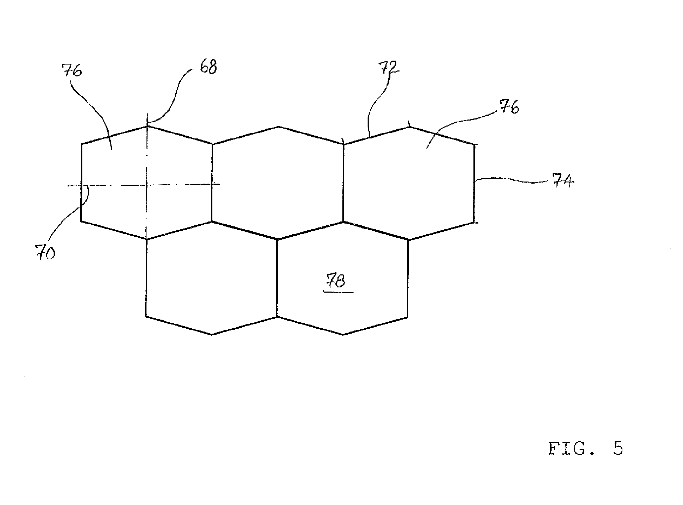

Anstelle der Form eines regelmäßigen Sechsecks mit sechs Symmetrieachsen können Bodenflächen 78 von alternativ ausgestalteten Hohlkörpern 76 in Form eines Polygons mit genau zwei Symmetrieachsen 68, 70 ausgebildet sein. Fig. 5 zeigt die alternative Ausführungsform der Bodenflächen 78 der Hohlkörpern 76 in Form eines Sechsecks mit genau zwei zueinander senkrechten Symmetrieachsen 68, 70 und zwei verschiedenen Seitenlängen 72, 74. Die Herstellung derartiger Hohlkörper 76 erfordert, auf die abgedeckte Untergrundfläche 12 bezogen, einen leicht erhöhten Materialeinsatz. Die Untergrundfläche 12 kann aber ebenso wie im Fall des regelmäßigen Sechsecks lückenlos abgedeckt werden, wobei durch eine Variation der Seitenlängen 72, 74 weitere Gestaltungsmöglichkeiten für eine Auslegung des Wasserdrainage- und Wasserrückhaltekörpers gegeben sind.

### Bezugszeichenliste

- 10: Wasserdrainage- und Wasserrückhaltesystem
- 12: Untergrundfläche
- 14: Oberfläche
- 16: horizontale Ebene
- 18: vertikale Richtung
- 20: Hohlkörper (erster)
- 22: Hohlkörper (oben offen)
- 24: Hohlkörper (oben geschl.)
- 26: Bodenfläche
- 28: Mantelflächeneinheit
- 30: Mantelfläche
- 32: Achse
- 34: Randlinie
- 36: Randlinie
- 38: Durchbruch
- 40: erste Richtung
- 42: zweite Richtung
- 44: Bahn
- 46: Bahnerstreckungsrichtung
- 48: Randbereiche (der Bahn)
- 50: Kraft
- 52: Schubspannung
- 54: Vlieseinheit
- 56: PP-Folienbahn
- 58: Faltlinie
- 60: rechteckf. Teilfläche
- 62: rechteckf. Teilfläche
- 64: separate Mantelfläche
- 66: separate Mantelfläche
- 68: Symmetrieachse
- 70: Symmetrieachse
- 72: Seitenlänge
- 74: Seitenlänge

- 76: Hohlkörper
- 78: Bodenfläche

## Patentansprüche

1. Wasserdrainage- und Wasserrückhaltekörper zur Verwendung in Untergrundflächen (12), insbesondere im Außenbereich, mit einer Mehrzahl von in einem Benutzungszustand in einer horizontalen Ebene (16) aneinandergrenzenden, im Wesentlichen prismatischen Hohlkörpern (20, 22, 24; 76), die jeweils eine Bodenfläche (26; 78), die im Wesentlichen parallel zu der horizontalen Ebene (16) angeordnet ist, und eine Mantelflächeneinheit (28) aufweisen, und deren Achsen (32) im Wesentlichen in einer vertikalen Richtung (18) senkrecht zu der horizontalen Ebene (16) angeordnet sind, wobei zumindest eine Mantelfläche (30) der Mantelflächeneinheit (28) eines Hohlkörpers (20, 22, 24; 76) zugleich als eine Mantelfläche (30) der Mantelflächeneinheit (28) eines angrenzenden Hohlkörpers (20, 22, 24; 76) dient.

2. Wasserdrainage- und Wasserrückhaltekörper nach Anspruch 1, **dadurch gekennzeichnet, dass** eine die Bodenfläche (26; 78) eines ersten Hohlkörpers (20) der Hohlkörper (20, 22, 24; 76) begrenzende Randlinie (34, 36) zugleich einen Teil einer Randlinie (34, 36) einer der Mantelflächen (30) der Mantelflächeneinheit (28) zumindest eines der an den ersten Hohlkörper (20) angrenzenden Hohlkörper (22, 24; 76) bildet.

3. Wasserdrainage- und Wasserrückhaltekörper nach Anspruch 1 oder 2, **dadurch gekennzeichnet, dass** eine der Mantelflächen (30) der Mantelflächeneinheit (28) zumindest eines Hohlkörpers (20, 22) der Hohlkörper (20, 22, 24; 76) und eine der Mantelflächen (30) der Mantelflächeneinheit (28) eines der an den Hohlkörper (20, 22) angrenzenden Hohlkörper (20, 22, 24; 76) stoffschlüssig miteinander verbunden sind.

4. Wasserdrainage- und Wasserrückhaltekörper nach einem der vorhergehenden Ansprüche, **dadurch gekennzeichnet, dass** zumindest eine der Mantelflächen (30) der Mantelflächeneinheit (28) zumindest eines Hohlkörpers (22) der Hohlkörper (20, 22, 24; 76) und eine der Mantelflächen (30) der Mantelflächeneinheit (28) eines der an den Hohlkörper (22) angrenzenden Hohlkörper (20, 22, 24; 76) separat ausgebildet sind und sich im Benutzungszustand zumindest teilweise in einem direkten Kontakt zueinander befinden.

5. Wasserdrainage- und Wasserrückhaltekörper nach einem der vorhergehenden Ansprüche, **dadurch gekennzeichnet, dass** die Bodenflächen (26; 78) der Hohlkörper (20, 22, 24; 76) in einer parallel zur horizontalen Ebene (16) angeordneten ersten Richtung (40) eine geschlossen zusammenhängende Fläche ausbilden, die im Wesentlichen parallel zur horizontalen Ebene (16) angeordnet ist.

6. Wasserdrainage- und Wasserrückhaltekörper nach Anspruch 4, **dadurch gekennzeichnet, dass** die Bodenflächen (26; 78) der Hohlkörper (20, 22, 24; 76) in zumindest einer parallel zur horizontalen Ebene (16) angeordneten zweiten Richtung (42), die die erste Richtung (40) in einem Punkt schneidet, keine zusammenhängende Fläche ausbilden.

7. Wasserdrainage- und Wasserrückhaltekörper nach einem der vorhergehenden Ansprüche, **dadurch gekennzeichnet, dass** die Bodenfläche (26; 78) eines ersten Hohlkörpers (20) der Hohlkörper (20, 22, 24; 76) und die Bodenfläche (26; 78) zumindest eines der an den ersten Hohlkörper (20) angrenzenden Hohlkörper (22) in der vertikalen Richtung (18) beabstandet ausgebildet sind.

8. Wasserdrainage- und Wasserrückhaltekörper zumindest nach Anspruch 4, **dadurch gekennzeichnet, dass** die Bodenflächen (26; 78) aneinandergrenzender Hohlkörper (20, 22, 24; 76), die entlang zumindest einer parallel zur horizontalen Ebene (16) angeordneten zweiten Richtung (42), die die erste Richtung (40) in einem Punkt schneidet, angeordnet sind, in der vertikalen Richtung (18) beabstandet ausgebildet sind.

9. Wasserdrainage- und Wasserrückhaltekörper nach einem der vorhergehenden Ansprüche, **dadurch gekennzeichnet, dass** die Bodenfläche (26; 78) zumindest eines der Hohlkörper (20, 22, 24; 76) zumindest eine als Durchbruch (38) in vertikaler Richtung (18) ausgebildete Ausnehmung umfasst.

10. Wasserdrainage- und Wasserrückhaltekörper nach einem der vorhergehenden Ansprüche, **dadurch gekennzeichnet, dass** die Bodenflächen (26; 78) der Hohlkörper (20, 22, 24; 76) im Wesentlichen in Form von regelmäßigen Sechsecken ausgebildet sind.

11. Wasserdrainage- und Wasserrückhaltekörper nach einem der vorhergehenden Ansprüche, **dadurch gekennzeichnet, dass** die Bodenflächen (26; 78) der Hohlkörper (20, 22, 24; 76) jeweils genau zwei Symmetrieachsen (68, 70) aufweisen.

12. Wasserdrainage- und Wasserrückhaltekörper nach einem der vorhergehenden Ansprüche, **dadurch gekennzeichnet, dass** die Hohlkörper (20, 22, 24; 76) im Wesentlichen aus einem thermoplastischen Kunststoff bestehen.

13. Wasserdrainage- und Wasserrückhaltekörper nach einem der vorhergehenden Ansprüche, **dadurch gekennzeichnet, dass** die Hohlkörper (20, 22, 24; 76) im Benutzungszustand lückenlos in einer länglichen Bahn (44) angeordnet sind.

14. Wasserdrainage- und Wasserrückhaltesystem (10) mit zumindest einem Wasserdrainage- und Wasserrückhaltekörper nach einem der vorhergehenden Ansprüche und zumindest einer Vlieseinheit (54), die mit zumindest zwei Bodenflächen (26; 78) von zweien der Hohlkörper (20, 22, 24; 76) des Wasserdrainage- und Wasserrückhaltekörpers stoffschlüssig verbunden ist.

15. Verfahren zur Herstellung eines Wasserdrainage- und Wasserrückhaltekörpers nach Anspruch1, die folgenden Schritte umfassend:
- Tiefziehen einer thermoplastischen Kunststofffolienbahn in eine vorgegeben Form
- Falten der tiefgezogenen Kunststofffolienbahn quer zu einer Bahnerstreckungsrichtung (46)
- Verschweißen von Teilflächen (60, 62) von durch das Falten der Kunststofffolienbahn aneinander liegenden Flächen der Kunststofffolienbahn
